# EUROPÄISCHE PATENTSCHRIFT

(11) **EP 2 631 130 B1**
(45) Veröffentlichungstag und Bekanntmachung des Hinweises auf die Patenterteilung: **19.11.2014**
(21) Anmeldenummer: 13154599.8
(22) Anmeldetag: 08.02.2013
(51) Int. Cl.: B60T 8/1764, B60T 8/1755

(54) **Verfahren und Vorrichtung zur Bestimmung eines resultierenden Soll-Lenkwinkels sowie Verfahren zur Einstellung eines Soll-Lenkwinkels**
Method and device for determining a resulting setpoint deflection angle and method for adjusting a setpoint deflection angle
Procédé et dispositif de détermination d'un angle de rotation de consigne résultant et procédé de réglage d'un angle de rotation de consigne

(30) Priorität: 21.02.2012 DE 102012003273; 06.07.2012 DE 102012013611
(43) Veröffentlichungstag der Anmeldung: 28.08.2013
(73) Patentinhaber: Volkswagen Aktiengesellschaft, 38440 Wolfsburg (DE)
(72) Erfinder: Bigalke, Michael, 38477 Jembke (DE)

(56) Entgegenhaltungen:
- WO-A1-2005/087562
- US-A1- 2002 198 646
- US-A1- 2005 205 346

## Beschreibung

Die Erfindung betrifft ein Verfahren und eine Vorrichtung zur Bestimmung eines resultierenden Soll-Lenkwinkels eines Fahrzeuges, während eines Bremsvorganges, insbesondere während eines µ-Split-Bremsvorgangs, sowie ein Verfahren zur Einstellung eines Soll-Lenkwinkels.

In Bremssituationen, bei denen auf gegenüberliegenden Fahrzeugseiten unterschiedliche Fahrbahn-Reibwerte existieren (µ-Split-Bremsvorgang), kann es vorkommen, dass das bremsende Fahrzeug zu einer Seite hin abdriftet und somit einen unzureichenden Geradeauslauf während des Bremsvorgangs hat.

Die DE 10 2008 027 093 A1 offenbart ein Verfahren zum Betreiben einer Kraftfahrzeug-Bremsanlage in einer Bremssituation mit auf gegenüberliegenden Fahrzeugseiten unterschiedlichen Fahrbahnreibwerten, wobei eine Bremskraftregelung mit der Maßgabe der Einstellung eines von Null verschiedenen Schwimmwinkels erfolgt. Hierbei wird ein Schwimmwinkel ermittelt und der ermittelte Schwimmwinkel als Regelgröße bei der Bremskraftregelung herangezogen.

Die DE 10 2009 026 994 A1 offenbart eine Vorrichtung zum Regeln der Querdynamik eines Fahrzeuges, umfassend einen Beobachter, der einen Ist-Schwimmwinkel des Fahrzeugs ermittelt, wobei die Vorrichtung ferner eine Einheit zur Vorgabe eines Soll-Schwimmwinkels, einen Regler sowie einen Aktuator zum Einstellen des Schwimmwinkels basierend auf einer Regeldifferenz des Schwimmwinkels aufweist. Der Aktuator kann hierbei ein steuerbares Differenzial und/oder einen Lenksteller umfassen.

Die DE 10 2006 051 908 A1 offenbart ein Verfahren zum Regeln der Bremskräfte an individuell betätigbaren Bremsvorrichtungen eines Fahrzeuges, wobei in Abhängigkeit von einer quasistationären Lenkaktion des Fahrers bei hoher Querbeschleunigung ein Giermoment bestimmt wird, das durch die individuelle Ansteuerung der Bremsvorrichtung realisiert wird. Hierbei wird das Giermoment mindestens anhand einer modellbasierten Schwimmwinkelgeschwindigkeit und einem modellbasierten Schwimmwinkel beim Überschreiten von der Schwimmwinkelgeschwindigkeit und dem Schwimmwinkel jeweils zugeordneten Schwellen aktiviert und der Bremsdruck in Abhängigkeit von der Querbeschleunigung in mindestens eine Bremsvorrichtung eingesteuert.

Bei leichten Abweichungen von einem Idealzustand des Fahrzeuges, z.B. bei schlecht eingeschliffenen Bremsen oder einer unsymmetrischen Beladung, kann es jedoch vorkommen, dass in einem µ-Split-Bremsvorgang trotz der vorgestellten Regelverfahren nur ein unzureichender Geradeauslauf des Fahrzeuges erfolgt und dieses somit trotzdem zu einer Seite hin abdriftet.

Es ist wünschenswert, den Geradeauslauf eines Fahrzeuges bei einem µ-Split-Bremsvorgang weiterhin zu verbessern.

Aus der US 2002/198646 A1 ist ein Verfahren zur Bestimmung eines resultierenden Soll-Winkels eines Fahrzeuges während eines Bremsvorganges bekannt, wobei ein Beginn des Bremsvorganges detektiert wird und ein idealer Soll-Lenkwinkel bestimmt wird. Weiter wird ein idealer Soll-Schwimmwinkel und ein ist-Schwimmwinkel während eines Bremsvorganges bestimmt. Der resultierende Soll-Lenkwinkel wird in Abhängigkeit einer Abweichung des Ist-Schwimmwinkels bestimmt und der resultierende Soll-Lenkwinkel eingestellt. Dabei wird zusätzlich eine Abweichung von einer Soll-Gierrate berücksichtigt. Das Verfahren läuft dabei vollautomatisch ab.

Es stellt sich das technische Problem, ein Verfahren und eine Vorrichtung zur Bestimmung eines resultierenden Soll-Lenkwinkels eines Fahrzeuges, während eines Bremsvorganges, insbesondere während eines µ-Split-Bremsvorgangs, zu schaffen, welche einen verbesserten Geradeauslauf des Fahrzeugs während des Bremsvorganges ermöglichen, ohne den Fahrer vollständig zu übergehen.

Die Lösung des technischen Problems ergibt sich aus den Gegenständen mit den Merkmalen der Ansprüche 1, 7 und 8. Weitere vorteilhafte Ausgestaltungen der Erfindung ergeben sich aus den Unteransprüchen.

Vorgeschlagen wird ein Verfahren zur Bestimmung eines resultierenden Soll-Lenkwinkels eines Fahrzeuges, während eines Bremsvorganges. Insbesondere wird ein Verfahren zur Bestimmung eines resultierenden Soll-Lenkwinkels eines Fahrzeuges während eines µ-Split-Bremsvorgangs vorgeschlagen. Ein µ-Split-Bremsvorgang bezeichnet hierbei einen Bremsvorgang, in dem auf gegenüberliegenden Fahrzeugseiten unterschiedliche Fahrbahn-Reibwerte vorliegen.

Hierbei wird ein Beginn eines Bremsvorganges, insbesondere ein Beginn eines µ-Split-Bremsvorganges, detektiert. Ein Bremsvorgang kann beispielsweise detektiert werden, falls ein Kraftfahrzeugführer eine Bremsanlage des Fahrzeuges, z.B. über ein Bremspedal, betätigt. Auch kann ein Bremsvorgang detektiert werden, falls eine Bremsanlage des Fahrzeuges automatisch, z.B. durch einen Bremsassistenten, oder eine so genannte Cruise-Control-Einheit, aktiviert wird. Ein µ-Split-Bremsvorgang kann detektiert werden, falls Bremsdrücke, die an den Rädern von sich gegenüberliegenden Fahrzeugseiten während des Bremsvorgangs eingestellt oder eingeregelt werden, voneinander verschieden sind. So ist z.B. ein Bremsdruck, der erforderlich ist, um ein auf Asphalt rollendes Rad auf eine vorbestimmte Geschwindigkeit zu bremsen, höher als ein Bremsdruck, der erforderlich ist, um ein sich auf Eis rollendes Rad auf die gleiche vorbestimmte Geschwindigkeit zu bremsen.

Weiter wird ein idealer Soll-Lenkwinkel bestimmt. Insbesondere wird der ideale Soll-Lenkwinkel derart bestimmt, dass in einem Normalzustand des Fahrzeugs ein Geradeauslauf des Fahrzeugs während des Bremsvorgangs erfolgt. Ein Normalzustand bezeichnet hierbei z.B. einen Zustand des Fahrzeuges mit symmetrischer Beladung und/oder symmetrisch gleichartig funktionierenden Bremsen.

Der Soll-Lenkwinkel bildet hierbei eine Führungsgröße für eine Regelung des Lenkwinkels derart, dass der gewünschte Geradeauslauf des Fahrzeugs während des Bremsvorgangs gewährleistet wird. Das Fahrzeug kann hierbei beispielsweise eine Einrichtung zur Einstellung eines Lenkwinkels umfassen, wobei diese Einrichtung den Lenkwinkel in Abhängigkeit des Soll-Lenkwinkels einstellt. Durch das Einstellen eines Lenkwinkels kann hierbei eine Auswirkung der unterschiedlichen Fahrbahn-Reibwerte in dem µ-Split-Bremsvorgang kompensiert werden.

Weiter wird ein idealer Soll-Schwimmwinkel oder ein idealer Soll-Schwimmwinkelbereich bestimmt. Hierbei kann der ideale Soll-Schwimmwinkel oder der ideale Soll-Schwimmwinkelbereich in Abhängigkeit einer fahrzeugspezifischen Beziehung zwischen Lenkwinkel und Schwimmwinkel bestimmt werden. Beispielsweise kann der ideale Soll-Schwimmwinkel oder der ideale Soll-Schwimmwinkelbereich modellbasiert bestimmt werden. Modellbasiert bedeutet hierbei, dass der ideale Soll-Schwimmwinkel oder der ideale Soll-Schwimmwinkelbereich in Abhängigkeit eines dynamischen Fahrzeugmodells bestimmt wird.

Der ideale Soll-Schwimmwinkel bezeichnet hierbei einen Schwimmwinkel, der sich einstellt, falls das Fahrzeug in einem Normalzustand während des Bremsvorganges geradeaus läuft.

Analog bezeichnet ein idealer Soll-Schwimmwinkelbereich einen Schwimmwinkelbereich, in welchem sich ein Ist-Schwimmwinkel befinden kann, falls das Fahrzeug in einem Normalzustand während des Bremsvorganges geradeaus läuft.

Der Schwimmwinkel bezeichnet hierbei einen Winkel zwischen einer Bewegungsrichtung eines Fahrzeugschwerpunktes und einer Fahrzeuglängsachse. Wird das Fahrzeug z.B. in einem µ-Split-Bremsvorgang gebremst und der ideale Soll-Lenkwinkel derart eingestellt, dass ein Geradeauslauf des Fahrzeugs während des µ-Split-Bremsvorgangs erfolgt, so stellt sich ein von Null verschiedener Schwimmwinkel während des Bremsvorganges ein.

Die Bestimmung eines idealen Soll-Lenkwinkels und eines idealen Soll-Schwimmwinkels oder eines idealen Soll-Schwimmwinkelbereiches erfolgt hierbei unter Annahme eines Normalzustandes des Fahrzeuges.

Weiter wird ein Ist-Schwimmwinkel während des Bremsvorganges bestimmt. Der Ist-Schwimmwinkel kann beispielsweise mittels einer Schätzeinrichtung aus einer Gierrate des Fahrzeugs während des Bremsvorganges, z.B. durch Integration, bestimmt werden. Hierfür kann eine Gierrate des Fahrzeuges erfasst werden.

Erfindungsgemäß wird der resultierende Soll-Lenkwinkel in Abhängigkeit einer Abweichung des Ist-Schwimmwinkels von dem idealen Soll-Schwimmwinkel oder von dem idealen Soll-Schwimmwinkelbereich bestimmt. Hierbei wird also die Führungsgröße, nämlich der Soll-Lenkwinkel, in Abhängigkeit der Abweichung angepasst.

Im Gegensatz zum vorgeschlagenen Verfahren offenbart die DE 10 2009 026 994 A1 nur, dass in Abhängigkeit einer Abweichung des Ist-Schwimmwinkels von dem idealen Soll-Schwimmwinkel ein Ausgleichs-Giermoment ermittelt wird, welches dann mittels eines Aktuators umgesetzt wird. Das erfindungsgemäße Verfahren nutzt einen direkten, z.B. funktionalen, Zusammenhang zwischen einem resultierenden Soll-Lenkwinkels und einer Abweichung des Ist-Schwimmwinkels von dem idealen Soll-Schwimmwinkel oder von dem idealen Soll-Schwimmwinkelbereich. Somit ermöglicht das vorgeschlagene Verfahren in vorteilhafter Weise eine direkte Ermittlung eines resultierenden Soll-Lenkwinkels in Abhängigkeit einer Abweichung des Ist-Schwimmwinkels von dem idealen Soll-Schwimmwinkel oder von dem idealen Soll-Schwimmwinkelbereich ohne die Ermittlung eines Ausgleichs-Giermoment.

Eine Abweichung des Ist-Schwimmwinkels von dem idealen Soll-Schwimmwinkelbereich kann beispielsweise eine Abweichung des Ist-Schwimmwinkels von einem minimalen Grenzschwimmwinkel des Soll-Schwimmwinkelbereichs oder eine Abweichung des Ist-Schwimmwinkels von einem maximalen Grenzschwimmwinkel des Soll-Schwimmwinkelbereichs oder eine Abweichung des Ist-Schwimmwinkels von einem zentralen Schwimmwinkel des Soll-Schwimmwinkelbereichs sein. Vorzugsweise ist eine Abweichung des Ist-Schwimmwinkels von dem idealen Soll-Schwimmwinkelbereich eine Abweichung von dem Grenzschwimmwinkel des idealen Soll-Schwimmwinkelbereichs für den ein Betrag der Abweichung am geringsten ist.

Durch die vorgeschlagene Anpassung der Führungsgröße Soll-Lenkwinkel ergibt sich in vorteilhafter Weise ein einfaches Verfahren zur Bestimmung eines resultierenden Soll-Lenkwinkels während eines Bremsvorganges, insbesondere während eines µ-Split-Bremsvorganges, wobei ein Geradeauslauf des Fahrzeuges während dieses Bremsvorganges gewährleistet und eine Abweichung des Fahrzeuges von der gewünschten Trajektorie während des Bremsvorganges reduziert oder minimiert wird.

Weiter wird zusätzlich ein von einem Kraftfahrzeugführer aufgebrachtes Lenkmoment erfasst. Das Lenkmoment kann während des Bremsvorganges erfasst werden. Eine Bestimmung des resultierenden Soll-Lenkwinkels in Abhängigkeit einer Abweichung des Ist-Schwimmwinkels von dem idealen Soll-Schwimmwinkel oder von dem idealen Soll-Schwimmwinkelbereich erfolgt, wenn das aufgebrachte Lenkmoment nicht oder nicht mehr als ein erstes vorbestimmtes Maß von einem Ziellenkmoment abweicht.

Zur Einstellung des Soll-Lenkwinkels, der als Führungsgröße in einem Regelvorgang fungiert, kann z.B. ein Aktor ein Lenkmoment erzeugen, um den gewünschten Soll-Lenkwinkel einzustellen. Das Ziel-Lenkmoment entspricht hierbei einem Lenkmoment, welches in einem Normalzustand des Fahrzeugs erforderlich ist, um den gewünschten Soll-Lenkwinkel einzustellen. Bringt nun ein Kraftfahrzeugführer ein Lenkmoment derart z.B. auf eine Lenkhandhabe, z.B. ein Lenkrad, auf, dass das aufgebrachte Lenkmoment um mehr als ein erstes vorbestimmtes Maß von diesem Ziel-Lenkmoment abweicht, so erfolgt keine Anpassung des Soll-Lenkwinkels. Hierbei wird erkannt, dass ein Kraftfahrzeugführer ein einzustellendes Ziel-Lenkmoment, welches für einen Geradeauslauf des Fahrzeuges während des Bremsvorganges erforderlich ist, überlenkt. Da der Kraftfahrzeugführer die Kontrolle über das Fahrzeug behalten soll, erfolgt in einem solchen Fall des Überlenkens keine Anpassung des Soll-Lenkwinkels in Abhängigkeit der Abweichung des Ist-Schwimmwinkels von dem idealen Soll-Schwimmwinkel oder von dem idealen Soll-Schwimmwinkelbereich. Das erste vorbestimmte Maß kann beispielsweise eine vorbestimmte Drehmomentdifferenz sein. Auch kann das erste vorbestimmte Maß Null sein. In diesem Fall erfolgt keine Anpassung, wenn das aufgebrachte Lenkmoment von dem Ziel-Lenkmoment abweicht.

Hierdurch kann in vorteilhafter Weise erreicht werden, dass ein Kraftfahrzeugführer, wenn gewünscht, die Kontrolle über das Fahrzeug auch während eines Bremsvorgangs behält.

In einer Ausführungsform erfolgt eine Bestimmung des resultierenden Soll-Lenkwinkels in Abhängigkeit einer Abweichung des Ist-Schwimmwinkels von dem idealen Soll-Schwimmwinkel oder dem idealen Soll-Schwimmwinkelbereich auch dann, wenn das aufgebrachte Lenkmoment um mehr als ein zweites vorbestimmtes Maß von einem Ziel-Lenkmoment abweicht und ein Ist-Schwimmwinkel nicht mehr als ein vorbestimmtes Maß von dem idealen Soll-Schwimmwinkel oder von dem idealen Soll-Schwimmwinkelbereichabweicht. In diesem Fall überlenkt ein Kraftfahrzeugführer zwar ein Ziel-Lenkmoment, welches eine Einstellung des Lenkwinkels derart gewährleistet, dass das Fahrzeug während des Bremsvorganges geradeaus läuft, jedoch reicht die Abweichung des aufgebrachten Lenkmoments von dem Ziel-Lenkmomentnicht aus, um eine derart große Abweichung des Ist-Schwimmwinkels von einem idealen Soll-Schwimmwinkelbereich zu erzeugen, dass eine Geradeausfahrt des Fahrzeugs während des Bremsvorgangs nicht mehr weiter gewährleistet ist. In diesem Fall kann das erfindungsgemäße Verfahren, also die Anpassung des Soll-Lenkwinkels in Abhängigkeit einer Abweichung des Ist-Schwimmwinkels von einem idealen Soll-Schwimmwinkel oder einem idealen Soll-Schwimmwinkelbereich auch dann durchgeführt werden, wenn ein Überlenken detektiert wird.

Das zweite vorbestimmte Maß kann kleiner als das erste vorbestimmte Maß sein.

Weiter kann in einem solchen Fall ein Ziel-Lenkmoment auf ein erfasstes, vom Kraftfahrzeugführer aufgebrachtes, Lenkmoment angepasst werden.

In einer weiteren Ausführungsform wird der resultierende Soll-Lenkwinkel bestimmt, indem ein Soll-Lenkwinkel reduziert wird, falls der Ist-Schwimmwinkel um ein vorbestimmtes Maß größer als der ideale Soll-Schwimmwinkel oder um ein vorbestimmtes Maß größer als ein maximaler Grenzschwimmwinkel des idealen Soll-Schwimmwinkelbereiches ist. Der zu reduzierende Soll-Lenkwinkel kann z.B. der ideale Soll-Lenkwinkel oder ein vorliegender, bereits angepasster, resultierender Soll-Lenkwinkel sein. Somit kann die Anpassung, nämlich eine Reduktion, immer in Abhängigkeit des zu Beginn des Bremsvorganges bestimmten idealen Soll-Lenkwinkels erfolgen oder in Abhängigkeit eines bereits angepassten Soll-Lenkwinkels.

Der ideale Soll-Schwimmwinkelbereich kann hierbei beispielsweise eine vorbestimmte Gradzahl Schwimmwinkel umfassen, z.B. 3° Schwimmwinkel.

Beispielsweise kann ein zentraler Schwimmwinkel des idealen Soll-Schwimmwinkelbereichs der erläuterte ideale Soll-Schwimmwinkel sein.

Analog wird der Soll-Lenkwinkel erhöht, falls der Ist-Schwimmwinkel um ein vorbestimmtes Maß kleiner als der ideale Soll-Schwimmwinkel ist oder falls der Ist-Schwimmwinkel um ein vorbestimmtes Maß kleiner als ein minimaler Grenzschwimmwinkel des idealen Soll-Schwimmwinkelbereiches ist.

Hierbei erfolgt eine vorzeichenbehaftete Betrachtung der Schwimmwinkel und des Lenkwinkels. Ein Schwimmwinkel ist positiv, falls eine Verdrehung der Fahrzeuglängsachse gegenüber der Bewegungsrichtung des Fahrzeugschwerpunkts entgegen des Uhrzeigersinns erfolgt. Wird beispielsweise angenommen, dass eine linke Fahrbahnhälfte eine Oberfläche aus Eis und eine rechte Fahrbahnhälfte eine Oberfläche aus Asphalt aufweist, so beträgt z.B. ein idealer Soll-Lenkwinkel +2° oder +3° und ein sich einstellender idealer Soll-Schwimmwinkel -1° bis -2°. Ist nun der Ist-Schwimmwinkel um ein vorbestimmtes Maß größer als der ideale Soll-Schwimmwinkel, beispielsweise also 0° oder +1 °, so neigt das Fahrzeug dazu, in Richtung der die Eisoberfläche aufweisenden Fahrbahnhälfte hin abzudriften. Folglich ist der Soll-Lenkwinkel zu reduzieren, beispielsweise auf +1° oder0°. Diese Reduktion wirkt dem Driften des Fahrzeuges entgegen.

Das vorgeschlagene Verfahren ermöglicht somit in einfacher und somit einfach zu implementierender Art und Weise eine Anpassung des Soll-Lenkwinkels einen Geradeauslauf des Fahrzeugs zu gewährleisten und Abweichungen von der gewünschten Trajektorie des Geradeauslaufes zu reduzieren.

In einer bevorzugten Ausführungsform erfolgt eine Reduktion, indem ein vorliegender resultierender Soll-Lenkwinkel oder der ideale Soll-Lenkwinkel mit einem Faktor multipliziert wird, der kleiner als 1 ist. Hierdurch ergibt sich in vorteilhafter Weise eine besonders einfache Ausführung einer Reduktion des Soll-Lenkwinkels.

In einer weiter bevorzugten Ausführungsform erfolgt eine Erhöhung, indem ein vorliegender Soll-Lenkwinkel oder der ideale Soll-Lenkwinkel mit einem Faktor multipliziert wird, der größer als 1 ist. Hierdurch ergibt sich in vorteilhafter Weise eine besonders einfache Ausgestaltung der Erhöhung.

Vorhergehend bezeichnet der vorliegende Soll-Lenkwinkel einen bereits erfindungsgemäß angepassten, also reduzierten oder erhöhten, Soll-Lenkwinkel.

In einer weiteren Ausführungsform ist einer Winkelabweichung des Ist-Schwimmwinkels von dem idealen Soll-Schwimmwinkel oder einem Grenzschwimmwinkel des idealen Soll-Schwimmwinkelbereichs jeweils ein vorbestimmter Wert des Faktors zugeordnet. Der Grenzschwimmwinkel kann hierbei ein minimaler oder ein maximaler Grenzschwimmwinkel sein.

Alternativ kann einem Intervall von Winkelabweichungen des Ist-Schwimmwinkels von dem idealen Soll-Schwimmwinkel oder einem Intervall von Winkelabweichungen des Ist-Schwimmwinkels von einem Grenzschwimmwinkel des idealen Schwimmwinkelbereiches jeweils ein vorbestimmter Wert des Faktors zugeordnet sein.

Beispielsweise kann einer positiven Winkelabweichung des Schwimmwinkels von dem idealen Schwimmwinkel oder einer positiven Winkelabweichung des Schwimmwinkels von einem maximalen Grenzschwimmwinkel des idealen Schwimmwinkelbereiches jeweils ein vorbestimmter Wert des Faktors zugeordnet sein, der kleiner als 1 ist. Die Winkelabweichung berechnet sich hierbei als Differenz des Ist-Schwimmwinkels von dem idealen Soll-Schwimmwinkel oder dem maximalen Grenzschwimmwinkel. Hierbei kann der Wert des Faktors mit zunehmender Winkelabweichung abnehmen, beispielsweise linear oder exponentiell.

Hierdurch kann in vorteilhafter Weise eine Stärke der Anpassung reguliert werden. Ist beispielsweise der Ist-Schwimmwinkel sehr viel größer als ein idealer Soll-Schwimmwinkel, so kann eine starke Reduktion, beispielsweise durch Multiplikation mit einem Faktor von 0,5, erfolgen. Ist die Abweichung des Ist-Schwimmwinkels von z.B. dem idealen Soll-Schwimmwinkel jedoch gering, so kann eine schwache Reduktion, beispielsweise durch Multiplikation mit einem Faktor 0,95, erfolgen.

Weiter vorgeschlagen wird ein Verfahren zur Einstellung eines Soll-Lenkwinkels eines Fahrzeugs, insbesondere während eines Bremsvorgangs, wobei
- ein Beginn eines Bremsvorgangs detektiert wird,
- ein idealer Soll-Lenkwinkel bestimmt wird,
- ein idealer Soll-Schwimmwinkel oder idealer Soll-Schwimmwinkelbereichbestimmt wird,
- ein Ist-Schwimmwinkel während des Bremsvorgangs bestimmt wird,
- der resultierende Soll-Lenkwinkel in Abhängigkeit einer Abweichung des Ist-Schwimmwinkels von dem idealen Soll-Schwimmwinkel oder von dem idealen Soll-Schwimmwinkelbereich bestimmt wird und
- ein Soll-Lenkwinkel des Fahrzeugs auf den resultierenden Soll-Lenkwinkel eingestellt wird.

Hierzu kann beispielsweise eine Einrichtung zur Einstellung eines Lenkwinkels derart gesteuert oder geregelt werden, dass der resultierende Soll-Lenkwinkel eingestellt wird.

Weiter wird zusätzlich ein von einem Kraftfahrzeugführer aufgebrachtes Lenkmoment erfasst. Das Lenkmoment kann während des Bremsvorganges erfasst werden. Eine Bestimmung des resultierenden Soll-Lenkwinkels in Abhängigkeit einer Abweichung des Ist-Schwimmwinkels von dem idealen Soll-Schwimmwinkel oder von dem idealen Soll-Schwimmwinkelbereich erfolgt, wenn das aufgebrachte Lenkmoment nicht oder nicht mehr als ein erstes vorbestimmtes Maß von einem Ziellenkmoment abweicht.

Weiter vorgeschlagen wird eine Vorrichtung zur Bestimmung eines resultierenden Soll-Lenkwinkels eines Fahrzeuges, wobei die Vorrichtung mindestens eine Auswerte- und Steuereinrichtung und eine Einrichtung zur Bestimmung eines Ist-Schwimmwinkels umfasst. Mittels der Vorrichtung ist ein Beginn eines Bremsvorgangs detektierbar. Beispielsweise kann mittels der mindestens einen Auswerte- und Steuereinrichtung ein Beginn eines Bremsvorgangs detektierbar sein. Hierzu kann die Auswerte- und Steuereinrichtung mit Sensoren im Fahrzeug datentechnisch verbunden sein. Weiter ist mittels der Vorrichtung ein idealer Soll-Lenkwinkel bestimmbar. Auch dieser ideale Soll-Lenkwinkel kann mittels der mindestens einen Auswerte- und Steuereinrichtung bestimmbar sein. Weiter ist mittels der Vorrichtung ein idealer Soll-Schwimmwinkel oder ein idealer Soll-Schwimmwinkelbereich bestimmbar. Auch dieser ideale Soll-Schwimmwinkel oder ideale Soll-Schwimmwinkelbereich kann mittels der mindestens einen Auswerte- und Steuereinrichtung bestimmbar sein.

Weiter ist mittels der Einrichtung zur Bestimmung eines Ist-Schwimmwinkels ein Ist-Schwimmwinkel während des Bremsvorgangs bestimmbar und mittels der Auswerte- und Steuereinrichtung ein resultierender Soll-Lenkwinkel in Abhängigkeit einer Abweichung des Ist-Schwimmwinkels von dem idealen Soll-Schwimmwinkel oder von dem idealen Soll-Schwimmwinkelbereich bestimmbar.

In einer weiteren Ausführungsform umfasst die Vorrichtung eine Einrichtung zur Erfassung eines von einem Kraftfahrzeugführer aufgebrachten Lenkmoments. Eine Bestimmung des resultierenden Soll-Lenkwinkels in Abhängigkeit einer Abweichung des Ist-Schwimmwinkels von dem idealen Soll-Schwimmwinkel oder von dem idealen Soll-Schwimmwinkelbereich mittels der Auswerte- und Steuereinrichtung erfolgt, wenn das aufgebrachte Lenkmoment nicht oder nicht mehr als ein erstes vorbestimmtes Maß von einem Ziel-Lenkmoment abweicht.

Mit der vorgeschlagenen Vorrichtung lässt sich vorteilhafter Weise eines der vorhergehend erläuterten Verfahren durchführen.

Auch kann die Vorrichtung eine Einrichtung zur Einstellung eines Lenkwinkels umfassen, wobei die Einrichtung z.B. von der Auswerte- und Steuereinrichtung derart gesteuert oder geregelt werden kann, dass der resultierende Soll-Lenkwinkel eingestellt wird.

Die Erfindung wird anhand eines Ausführungsbeispiels näher erläutert. Die Fig. zeigen:
- Fig. 1: eine schematische Draufsicht auf ein Fahrzeug in einem µ-Split-Bremsvorgang und
- Fig. 2: ein schematischer zeitlicher Verlauf eines idealen Soll-Lenkwinkels, eines resultierenden Soll-Lenkwinkels und eines idealen Soll-Schwimmwinkels.

Nachfolgend bezeichnen gleiche Bezugszeichen Elemente mit gleichen oder ähnlichen technischen Eigenschaften.

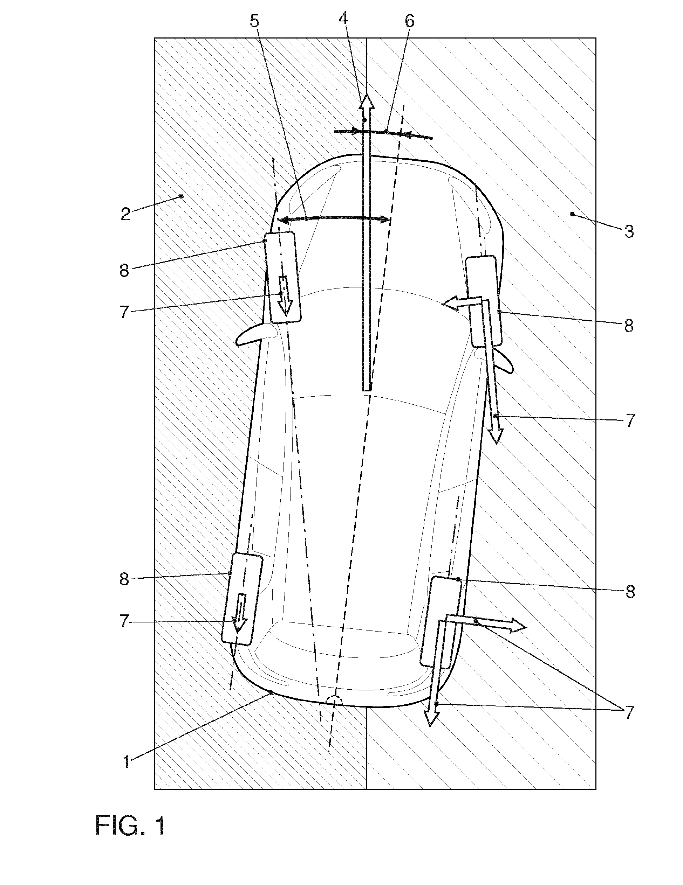

In Fig. 1 ist eine schematische Draufsicht auf ein Kraftfahrzeug 1 während eines µ-Split-Bremsvorgangs dargestellt. Hierbei ist dargestellt, dass eine linke Fahrbahnhälfte 2 eine Oberfläche aus Eis aufweist. Eine rechte Fahrbahnhälfte 3 weist eine Oberfläche aus Asphalt auf. Weiter dargestellt ist die Richtung eines gewünschten Geradeauslaufes während des Bremsvorganges (Pfeil 4), ein Lenkwinkel 5 und ein Schwimmwinkel 6. Wird ein Beginn eines solchen µ-Split-Bremsvorganges detektiert, so wird ein idealer Soll-Lenkwinkel bestimmt, der in Fig. 1 beispielsweise +2° beträgt. Entsprechend dieses idealen Soll-Lenkwinkels, der als Führungsgröße für eine Regelung des Lenkwinkels 5 fungiert, wird ein idealer Soll-Schwimmwinkel bestimmt, der sich während des µ-Split-Bremsvorganges bei einer Geradeausfahrt des Fahrzeugs einstellt. In Fig. 1 ist dargestellt, dass der ideale Soll-Schwimmwinkel bei -1° liegt. Weiter dargestellt sind Bremskräfte, die während des Bremsvorganges über die Reifen 8 auf das Fahrzeug 1 wirken (Pfeile 7).

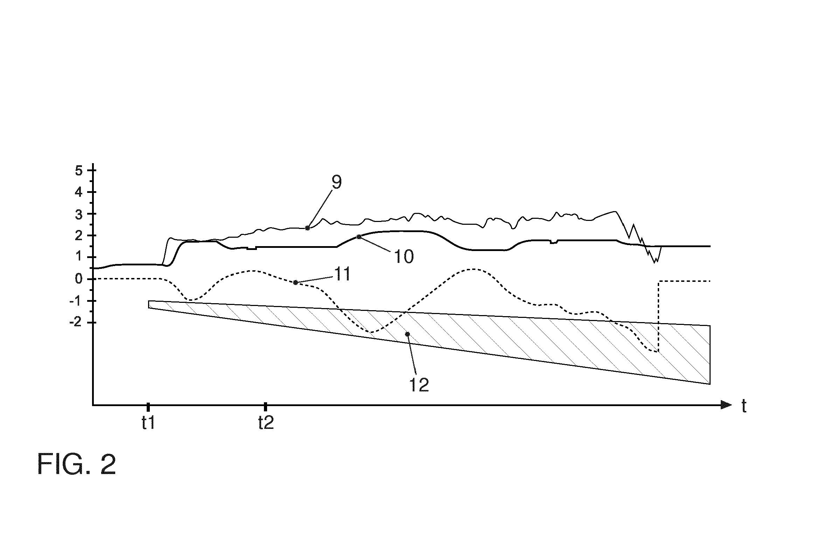

In Fig. 2 ist ein schematischer zeitlicher Verlauf eines idealen Soll-Lenkwinkels 9, eines resultierenden Soll-Lenkwinkels 10 und eines Ist-Schwimmwinkels 11 dargestellt. Weiter dargestellt ist ein idealer Soll-Schwimmwinkelbereich 12. Zu Beginn eines Bremsvorgangs (Zeitpunkt t1) wird ein idealer Soll-Lenkwinkel 9 bestimmt, der beispielsweise +2° beträgt. Ebenfalls wird ein idealer Soll-Schwimmwinkelbereich bestimmt, der zum Zeitpunkt t1 von -1° bis -1,2° reicht. In Fig. 2 ist dargestellt, dass der ideale Soll-Schwimmwinkelbereich 12 mit zunehmender Zeit t anwächst, wobei gleichzeitig ein maximaler Grenzwinkel des idealen Soll-Schwimmwinkelbereiches 12 von -1° ausgehend linear abnimmt. Auch ist vorstellbar, dass der maximale Grenzwinkel konstant-1° beträgt. Ebenfalls wird nach Beginn des Bremsvorganges ein Ist-Schwimmwinkel 11 erfasst. Dieser ist größer als der maximale Grenzschwimmwinkel des idealen Soll-Schwimmwinkelbereiches 12. Entsprechend wird der ideale Soll-Lenkwinkel 9 reduziert, indem der ideale Soll-Lenkwinkel 9 mit einem Faktor von ungefähr 0,6 multipliziert wird. Zu einem Zeitpunkt t2 beträgt der ideale Soll-Schwimmwinkel 9 beispielsweise 2,5°, während der resultierende Soll-Lenkwinkel 10 1,5° beträgt, Hierdurch kann in vorteilhafter Weise ein Abweichen des in Fig. 1 dargestellten Fahrzeuges 1 von einem Geradeauslauf (Pfeil 4) während eines µ-Split-Bremsvorganges reduziert werden.

### Bezugszeichenliste

- 1: Kraftfahrzeug
- 2: linke Fahrbahnhälfte
- 3: rechte Fahrbahnhälfte
- 4: Pfeil
- 5: Lenkwinkel
- 6: Schwimmwinkel
- 7: Pfeil
- 8: Reifen
- 9: idealer Soll-Lenkwinkel
- 10: resultierender Soll-Lenkwinkel
- 11: Ist-Schwimmwinkel
- 12: idealer Soll-Schwimmwinkelbereich
- t1: Zeitpunkt
- t2: Zeitpunkt
- t: Zeit

## Patentansprüche

1. Verfahren zur Bestimmung eines resultierenden Soll-Lenkwinkels (10) eines Fahrzeugs (1), während eines Bremsvorgangs, wobei
- ein Beginn eines Bremsvorgangs detektiert wird,
- ein idealer Soll-Lenkwinkel (9) bestimmt wird,
- ein idealer Soll-Schwimmwinkel oder idealer Soll-Schwimmwinkelbereich (12) bestimmt wird,
- ein Ist-Schwimmwinkel (11) während des Bremsvorgangs bestimmt wird,
- der resultierende Soll-Lenkwinkel (10) in Abhängigkeit einer Abweichung des Ist-Schwimmwinkels (11) von dem idealen Soll-Schwimmwinkel oder von dem idealen Soll-Schwimmwinkelbereich (12) bestimmt wird,
**dadurch gekennzeichnet, dass**
zusätzlich ein von einem Kraftfahrzeugführer aufgebrachtes Lenkmoment erfasst wird, wobei eine Bestimmung des resultierenden Soll-Lenkwinkels (10) in Abhängigkeit einer Abweichung des Ist-Schwimmwinkels (11) von dem idealen Soll-Schwimmwinkel oder von dem idealen Soll-Schwimmwinkelbereich (12) erfolgt, wenn das aufgebrachte Lenkmoment nicht oder nicht mehr als ein erstes vorbestimmtes Maß von einem Ziel-Lenkmoment abweicht.

2. Verfahren nach Anspruch 1, **dadurch gekennzeichnet, dass** eine Bestimmung des resultierenden Soll-Lenkwinkels (10) in Abhängigkeit einer Abweichung des Ist-Schwimmwinkels (11) von dem idealen Soll-Schwimmwinkel oder von dem idealen Soll-Schwimmwinkelbereich (12) auch dann erfolgt, wenn das aufgebrachte Lenkmoment um mehr als ein zweites vorbestimmtes Maß von einem Ziel-Lenkmoment abweicht und ein Ist-Schwimmwinkel (11) nicht mehr als ein vorbestimmtes Maß von dem idealen Soll-Schwimmwinkel oder von dem idealen Soll-Schwimmwinkelbereich (12) abweicht.

3. Verfahren nach Anspruch 1 oder 2, **dadurch gekennzeichnet, dass** der resultierende Soll-Lenkwinkel (10) bestimmt wird, indem ein Soll-Lenkwinkel reduziert wird, falls der Ist-Schwimmwinkel (11) um ein vorbestimmtes Maß größer als der ideale Soll-Schwimmwinkel oder um ein vorbestimmtes Maß größer als ein maximaler Grenzschwimmwinkel des idealen Soll-Schwimmwinkelbereichs (12) ist und ein Soll-Lenkwinkel erhöht wird, falls der Ist-Schwimmwinkel (11) um ein vorbestimmtes Maß kleiner als der ideale Soll-Schwimmwinkel oder um ein vorbestimmtes Maß kleiner als ein minimaler Grenzschwimmwinkel des idealen Soll-Schwimmwinkelbereichs (12) ist.

4. Verfahren nach Anspruch 3, **dadurch gekennzeichnet, dass** eine Reduktion erfolgt, indem ein vorliegender resultierender Soll-Lenkwinkel (10) oder der ideale Soll-Lenkwinkel (9) mit einem Faktor multipliziert wird, der kleiner als 1 ist.

5. Verfahren nach Anspruch 3 oder 4, **dadurch gekennzeichnet, dass** eine Erhöhung erfolgt, indem ein vorliegende Soll-Lenkwinkel (10) oder der ideale Soll-Lenkwinkel (9) mit einem Faktor multipliziert wird, der größer als 1 ist.

6. Verfahren nach Anspruch 4 oder 5, **dadurch gekennzeichnet, dass** einer Winkelabweichung des Ist-Schwimmwinkels (11) von dem idealen Soll-Schwimmwinkel oder einem Grenzschwimmwinkel des idealen Soll-Schwimmwinkelbereichs (12) jeweils ein vorbestimmter Wert des Faktors zugeordnet ist oder einem Intervall von Winkelabweichungen des Ist-Schwimmwinkels (11) von dem idealen Soll-Schwimmwinkel oder einem Grenzschwimmwinkel des idealen Schwimmwinkelbereichs (12) jeweils ein vorbestimmter Wert des Faktors zugeordnet ist.

7. Verfahren zur Einstellung eines Soll-Lenkwinkels eines Fahrzeugs (1), während eines Bremsvorgangs, wobei
- ein Beginn eines Bremsvorgangs detektiert wird,
- ein idealer Soll-Lenkwinkel (9) bestimmt wird,
- ein idealer Soll-Schwimmwinkel oder idealer Soll-Schwimmwinkelbereich (12) bestimmt wird,
- ein Ist-Schwimmwinkel (11) während des Bremsvorgangs bestimmt wird,
- der resultierende Soll-Lenkwinkel (10) in Abhängigkeit einer Abweichung des Ist-Schwimmwinkels (11) von dem idealen Soll-Schwimmwinkel oder von dem idealen Soll-Schwimmwinkelbereich (12) bestimmt wird und ein Soll-Lenkwinkel des Fahrzeugs auf den resultierenden Soll-Lenkwinkel (10) eingestellt wird,
**dadurch gekennzeichnet, dass**
zusätzlich ein von einem Kraftfahrzeugführer aufgebrachtes Lenkmoment erfasst wird, wobei eine Bestimmung des resultierenden Soll-Lenkwinkels (10) in Abhängigkeit einer Abweichung des Ist-Schwimmwinkels (11) von dem idealen Soll-Schwimmwinkel oder von dem idealen Soll-Schwimmwinkelbereich (12) erfolgt, wenn das aufgebrachte Lenkmoment nicht oder nicht mehr als ein erstes vorbestimmtes Maß von einem Ziel-Lenkmoment abweicht.

8. Vorrichtung zur Bestimmung eines resultierenden Soll-Lenkwinkels (10) eines Fahrzeugs, wobei die Vorrichtung mindestens eine Auswerte- und Steuereinrichtung und eine Einrichtung zur Bestimmung eines Ist-Schwimmwinkels (11) umfasst, wobei mittels der Vorrichtung ein Beginn eines Bremsvorgangs detektierbar, ein idealer Soll-Lenkwinkel (9) bestimmbar und ein idealer Soll-Schwimmwinkel oder idealer Soll-Schwimmwinkelbereich (12) bestimmbar ist, wobei mittels der Einrichtung zur Bestimmung eines Ist-Schwimmwinkels (11) ein Ist-Schwimmwinkel (11) während des Bremsvorgangs bestimmbar ist und mittels der Auswerte- und Steuereinrichtung ein resultierender Soll-Lenkwinkel (10) in Abhängigkeit einer Abweichung des Ist-Schwimmwinkels (11) von dem idealen Soll-Schwimmwinkel oder von dem idealen Soll-Schwimmwinkelbereich (12) bestimmbar ist,
**dadurch gekennzeichnet, dass** die Vorrichtung eine Einrichtung zur Erfassung eines von einem Kraftfahrzeugführer aufgebrachten Lenkmoments umfasst, wobei eine Bestimmung des resultierenden Soll-Lenkwinkels (10) in Abhängigkeit einer Abweichung des Ist-Schwimmwinkels (11) von dem idealen Soll-Schwimmwinkel oder von dem idealen Soll-Schwimmwinkelbereich (12) mittels der Auswerte- und Steuereinrichtung erfolgt, wenn das aufgebrachte Lenkmoment nicht oder nicht mehr als ein erstes vorbestimmtes Maß von einem Ziel-Lenkmoment abweicht.

## Claims

1. Method for determining a resulting setpoint steering angle (10) of a vehicle (1) during a braking process, wherein
- a start of a braking process is detected,
- an ideal setpoint steering angle (9) is determined,
- an ideal setpoint sideslip angle or ideal setpoint sideslip angle range (12) is determined,
- an actual sideslip angle (11) is determined during the braking process,
- the resulting setpoint steering angle (10) is determined as a function of a deviation of the actual sideslip angle (11) from the ideal setpoint sideslip angle or from the ideal setpoint sideslip angle range (12),
**characterized in that**
in addition a steering torque which is applied by a motor vehicle driver is detected, wherein the resulting setpoint steering angle (10) is determined as a function of a deviation of the actual sideslip angle (11) from the ideal setpoint sideslip angle or from the ideal setpoint sideslip angle range (12) if the applied steering torque does not deviate from a target steering torque, or does not deviate by more than a first predetermined amount therefrom.

2. Method according to Claim 1, **characterized in that** the resulting setpoint steering angle (10) is determined as a function of a deviation of the actual sideslip angle (11) from the ideal setpoint sideslip angle or from the ideal setpoint sideslip angle range (12) even if the applied steering torque deviates from a target steering torque by more than a second predetermined amount, and an actual sideslip angle (11) does not deviate from the ideal setpoint sideslip angle or from the ideal setpoint sideslip angle range (12) by more than a predetermined amount.

3. Method according to Claim 1 or 2, **characterized in that** the resulting setpoint steering angle (10) is determined by reducing a setpoint steering angle if the actual sideslip angle (11) is greater than the ideal setpoint sideslip angle by a predetermined amount or greater than a maximum limiting sideslip angle of the ideal setpoint sideslip angle range (12) by a predetermined amount and increasing a setpoint steering angle if the actual sideslip angle (11) is smaller than the ideal setpoint sideslip angle by a predetermined amount or is smaller than a minimum limiting sideslip angle of the ideal setpoint sideslip angle range (12) by a predetermined amount.

4. Method according to Claim 3, **characterized in that** a reduction takes place by multiplying a resulting setpoint steering angle (10) which is present or the ideal setpoint steering angle (9) by a factor which is smaller than 1.

5. Method according to Claim 3 or 4, **characterized in that** an increase takes place by multiplying a setpoint steering angle (10) which is present or the ideal setpoint steering angle (9) by a factor which is greater than 1.

6. Method according to Claim 4 or 5, **characterized in that** an angular deviation of the actual sideslip angle (11) from the ideal setpoint sideslip angle or a limiting sideslip angle of the ideal setpoint sideslip angle range (12) is respectively assigned a predetermined value of the factor or an interval of angular deviations of the actual sideslip angle (11) from the ideal setpoint sideslip angle or from a limiting sideslip angle of the ideal sideslip angle range (12) is respectively assigned a predetermined value of the factor.

7. Method for setting a setpoint steering angle of a vehicle (1) during a braking process, wherein
- a start of a braking process is detected,
- an ideal setpoint steering angle (9) is determined,
- an ideal setpoint sideslip angle or ideal setpoint sideslip angle range (12) is determined,
- an actual sideslip angle (11) is determined during the braking process,
- the resulting setpoint steering angle (10) is determined as a function of a deviation of the actual sideslip angle (11) from the ideal setpoint sideslip angle or from the ideal setpoint sideslip angle range (12), and a setpoint steering angle of the vehicle is set to the resulting setpoint steering angle (10),
**characterized in that**
in addition a steering torque which is applied by a motor vehicle driver is detected, wherein the resulting setpoint steering angle (10) is determined as a function of a deviation of the actual sideslip angle (11) from the ideal setpoint sideslip angle or from the ideal setpoint sideslip angle range (12) if the applied steering torque does not deviate from a target steering torque, or does not deviate by more than a first predetermined amount therefrom.

8. Device for determining a resulting setpoint steering angle (10) of a vehicle, wherein the device comprises at least one evaluation and control apparatus and an apparatus for determining an actual sideslip angle (11), wherein by means of the device a start of a braking process can be detected, an ideal setpoint steering angle (9) can be determined and an ideal setpoint sideslip angle or ideal setpoint sideslip angle range (12) can be determined, wherein by means of the apparatus for determining an actual sideslip angle (11) an actual sideslip angle (11) can be determined during the braking process, and by means of the evaluation and control apparatus a resulting setpoint steering angle (10) can be determined as a function of a deviation of the actual sideslip angle (11) from the ideal setpoint sideslip angle or from the ideal setpoint sideslip angle range (12),
**characterized in that** the device comprises an apparatus for detecting a steering torque which is applied by a motor vehicle driver, wherein the resulting setpoint steering angle (10) is determined as a function of a deviation of the actual sideslip angle (11) from the ideal setpoint sideslip angle or from the ideal setpoint sideslip angle range (12) by means of the evaluation and control apparatus if the applied steering torque does not deviate from a target steering torque, or does not deviate by more than a first predetermined amount therefrom.

## Revendications

1. Procédé de détermination d'un angle de braquage de consigne résultant (10) d'un véhicule (1) pendant un processus de freinage :
- un début d'un processus de freinage étant détecté ;
- un angle de braquage de consigne idéal (9) étant déterminé ;
- un angle de dérapage de consigne idéal ou plage angulaire de dérapage de consigne idéale (12) étant déterminé ;
- un angle de dérapage réel (11) étant déterminé pendant le processus de freinage ;
- l'angle de braquage de consigne résultant (10) étant déterminé en fonction d'un écart de l'angle de dérapage réel (11) par rapport à l'angle de dérapage de consigne idéal ou par rapport à la plage angulaire de dérapage de consigne idéale (12) ;
**caractérisé en ce que** :
un couple de braquage appliqué par un conducteur de véhicule automobile est en outre détecté, une détermination de l'angle de braquage de consigne résultant (10) se produisant en fonction d'un écart de l'angle de dérapage réel (11) par rapport à l'angle de dérapage de consigne idéal ou par rapport à la plage angulaire de dérapage de consigne idéale (12) lorsque le couple de braquage appliqué ne s'écarte pas d'un couple de braquage cible ou pas plus qu'une première mesure prédéterminée.

2. Procédé selon la revendication 1, **caractérisé en ce qu'**une détermination de l'angle de braquage de consigne résultant (10) se produit également en fonction d'un écart de l'angle de dérapage réel (11) par rapport à l'angle de dérapage de consigne idéal ou par rapport à la plage angulaire de dérapage de consigne idéale (12) lorsque le couple de braquage appliqué s'écarte de plus d'une deuxième mesure prédéterminée par rapport à un couple de braquage cible et qu'un angle de dérapage réel (11) ne s'écarte pas plus qu'une mesure prédéterminée par rapport à l'angle de dérapage de consigne idéal ou par rapport à la plage angulaire de dérapage de consigne idéale (12).

3. Procédé selon la revendication 1 ou 2, **caractérisé en ce que** l'angle de braquage de consigne résultant (10) est déterminé **en ce qu'**un angle de braquage de consigne est réduit si l'angle de dérapage réel (11) est supérieur d'une mesure prédéterminée à l'angle de dérapage de consigne idéal ou est supérieur d'une mesure prédéterminée à un angle de dérapage limite maximal de la plage angulaire de dérapage de consigne idéale (12) et qu'un angle de braquage de consigne est augmenté si l'angle de dérapage réel (11) est inférieur d'une mesure prédéterminée à l'angle de dérapage de consigne idéal ou inférieur d'une mesure prédéterminée à un angle de dérapage limite minimal de la plage angulaire de dérapage de consigne idéale (12).

4. Procédé selon la revendication 3, **caractérisé en ce qu'**une réduction se produit **en ce qu'**un angle de braquage de consigne résultant (10) présent ou l'angle de braquage de consigne idéal (9) est multiplié d'un facteur inférieur à 1.

5. Procédé selon la revendication 3 ou 4, **caractérisé en ce qu'**une augmentation se produit **en ce qu'**un angle de braquage de consigne (10) présent ou l'angle de braquage de consigne idéal (9) est multiplié d'un facteur supérieur à 1.

6. Procédé selon la revendication 4 ou 5, **caractérisé en ce qu'**une valeur prédéterminée du facteur est respectivement associée à un écart angulaire de l'angle de dérapage réel (11) par rapport à l'angle de dérapage de consigne idéal ou à un angle de dérapage limite de la plage angulaire de dérapage de consigne idéale (12) ou qu'une valeur prédéterminée du facteur est respectivement associée à un intervalle entre les écarts angulaires de l'angle de dérapage réel (11) par rapport à l'angle de dérapage de consigne idéal ou à un angle de dérapage limite de la plage angulaire de dérapage idéale (12).

7. Procédé de réglage d'un angle de braquage de consigne d'un véhicule (1) pendant un processus de freinage :
- un début d'un processus de freinage étant détecté ;
- un angle de braquage de consigne idéal (9) étant déterminé ;
- un angle de dérapage de consigne idéal ou plage angulaire de dérapage de consigne idéale (12) étant déterminé ;
- un angle de dérapage réel (11) étant déterminé pendant le processus de freinage ;
- l'angle de braquage de consigne résultant (10) étant déterminé en fonction d'un écart de l'angle de dérapage réel (11) par rapport à l'angle de dérapage de consigne idéal ou par rapport à la plage angulaire de dérapage de consigne idéale (12) et un angle de braquage de consigne du véhicule étant réglé sur l'angle de braquage de consigne résultant (10) ;
**caractérisé en ce que** :
un couple de braquage appliqué par un conducteur de véhicule automobile est en outre détecté, une détermination de l'angle de braquage de consigne résultant (10) se produisant en fonction d'un écart de l'angle de dérapage réel (11) par rapport à l'angle de dérapage de consigne idéal ou par rapport à la plage angulaire de dérapage de consigne idéale (12) lorsque le couple de braquage appliqué ne s'écarte pas d'un couple de braquage cible ou pas plus qu'une première mesure prédéterminée.

8. Dispositif de détermination d'un angle de braquage de consigne résultant (10) d'un véhicule, le dispositif comprenant au moins un dispositif d'analyse et de commande et un dispositif de détermination d'un angle de dérapage réel (11), un début d'un processus de freinage pouvant être détecté à l'aide du dispositif, un angle de braquage de consigne idéal (9) pouvant être déterminé et un angle de dérapage de consigne idéal ou plage angulaire de dérapage de consigne idéale (12) pouvant être déterminé, un angle de dérapage réel (11) pouvant être déterminé pendant le processus de freinage à l'aide du dispositif de détermination d'un angle de dérapage réel (11) et un angle de braquage de consigne résultant (10) pouvant être déterminé à l'aide du dispositif d'analyse et de commande en fonction d'un écart de l'angle de dérapage réel (11) par rapport à l'angle de dérapage de consigne idéal ou par rapport à la plage angulaire de dérapage de consigne idéale (12), **caractérisé en ce que** le dispositif comprend un dispositif de détection d'un couple de braquage appliqué par un conducteur de véhicule automobile, une détermination de l'angle de braquage de consigne résultant (10) se produisant à l'aide du dispositif d'analyse et de commande en fonction d'un écart de l'angle de dérapage réel (11) par rapport à l'angle de dérapage de consigne idéal ou par rapport à la plage angulaire de dérapage de consigne idéale (12) lorsque le couple de braquage appliqué ne s'écarte pas d'un couple de braquage cible ou ne s'écarte pas plus de lui qu'une première mesure prédéterminée.
